# EUROPÄISCHE PATENTSCHRIFT

(11) **EP 2 531 703 B1**
(45) Veröffentlichungstag und Bekanntmachung des Hinweises auf die Patenterteilung: **04.10.2017**
(21) Anmeldenummer: 11701101.5
(22) Anmeldetag: 25.01.2011
(51) Int. Cl.: F01N 1/02, F01N 1/06, F01N 3/00, F01N 5/02, F01N 13/18, F01N 13/16, F01N 13/14, F01N 13/00

(54) **ABGASANLAGE**
EXHAUST SYSTEM
SYSTÈME D'ÉCHAPPEMENT

(30) Priorität: 05.02.2010 DE 102010007013
(43) Veröffentlichungstag der Anmeldung: 12.12.2012
(73) Patentinhaber: Eberspächer Exhaust Technology GmbH & Co. KG, 66539 Neunkirchen (DE)
(72) Erfinder: WIRTH, Georg, 73230 Kirchheim/Teck (DE)
(74) Vertreter: BRP Renaud & Partner mbB Rechtsanwälte Patentanwälte Steuerberater
(86) Internationale Anmeldenummer: PCT/EP2011/050952
(87) Internationale Veröffentlichungsnummer: WO 2011/095412

(56) Entgegenhaltungen:
- EP-A1- 2 108 791
- DE-A1- 3 402 810
- JP-A- 6 074 036
- JP-A- 06 093 826
- JP-A- 11 024 672
- US-A- 5 446 249
- US-A- 5 619 020

## Beschreibung

Die Erfindung betrifft eine Abgasanlage einer Brennkraftmaschine, insbesondere eines Kraftfahrzeuges, mit den Merkmalen des Oberbegriffs des Anspruchs 1.

Bei der Verbrennung von Kraftstoffen entsteht Verbrennungswasser, das zum Beispiel im Winterfahrbetrieb zu Problemen an den Bauteilen der Abgasanlage führen kann. Je nach Zusammensetzung des Kraftstoffes kann dabei ein Volumen an Verbrennungswasser durch die Verbrennung freigesetzt werden, das vergleichbar zu dem Volumen des verbrauchten Kraftstoffes ist. In dem normalen Mittellastbetrieb des Kraftfahrzeuges wird üblicherweise dieses entstandene Verbrennungswasser zusammen mit den heißen Abgasen als Dampf über die Abgasanlage ausgeblasen. In der Winterzeit sowie in den winternahen Übergangszeiten kann es jedoch zur Unterschreitung des Taupunktes und zum Niederschlag von flüssigem Verbrennungswasser in der Abgasanlage kommen. So kann der Taupunkt von Abgasen einer Brennkraftmaschine in einem Kraftfahrzeug, je nach Verbrennungsverfahren, bei etwa 20°C bis 60°C liegen. Somit kann es bei solchen Temperaturen zu Kondensatansammlungen in der Abgasanlage kommen. Dies führt in der Praxis dazu, dass an allen Bauteilen in der Abgasanlage, die zum Abgas Kontakt haben und die aufgrund der Umgebungsbedingungen der Abgasanlage unterhalb solcher Temperaturen bleiben, Kondensatansammlungen ausgebildet werden können. Bei den meisten Komponenten heutiger Abgasanlagen werden nach kurzer Betriebszeit üblicherweise deutlich höhere Temperaturen erreicht und somit kann das gebildete Kondensat nach kurzer Zeit verdampft und von dem vorbeiströmenden Abgas mitgenommen werden. Insbesondere jedoch im Kurzstreckenbetrieb, bei tiefen Außentemperaturen kann sich eine erhöhte Kondensatansammlung ausbilden, die in der Abgasanlage einen Kondensatsumpf ausbilden kann, da die Dampfdruckdifferenz von einem heißen Abgasanlagenabschnitt zu einem kalten Abgasanlagenabschnitt für einen ständigen Transport und Niederschlag des Verbrennungswassers sorgt und somit das Wasser an den tiefsten Stellen der Abgasanlage zusammenläuft und dort besagten Kondensatsumpf ausbilden kann. Kritisch an einem solchen Kondensatsumpf ist eine mögliche Aufkonzentration des Kondensates mit säurebildenden Bestandteilen des Abgases oder anderen Abgasbestandteilen, was zu einer dauerhaften Korrosionsbelastung eben dieser Abschnitte der Abgasanlage führt, in denen sich eine solche Kondensatansammlung bzw. ein solcher Kondensatsumpf bilden kann. Deshalb werden verschiedene Maßnahmen ergriffen, um eine solche immer wieder auftretende Korrosionsbelastung der Abgasanlage zu verringern. Zu diesem Zweck kann zum Beispiel an der tiefsten Stelle durch Tieflegen des Ausgangsrohres zum Beispiel im letzten Schalldämpfer eine wirksame Vorbeileitung des heißen Abgases erreicht werden. Dadurch wird das zusammengelaufene Kondensat sowohl mit der Strömung mitgerissen, als auch durch dieselbe aufgeheizt und gegebenenfalls verdampft.

Ist jedoch das konstruktive Tieferlegen des Ausgangsrohres im letzten Schalldämpfer in dem tiefsten Punkt nicht möglich, kann man versuchen, das Kondensat mit Saugröhrchen nach Art einer Wasserstrahlpumpe abzusaugen und aus der Abgasanlage auszubringen. Dazu kann zusätzlich am Rohreintritt im Hauptrohr eine Drosselung eingeführt werden, um bei großen Abgasdurchsätzen den Druck soweit abzusenken und damit eine derart hohe Druckdifferenz zwischen der Kondensatansammlung und dem im Abgasrohr strömenden Abgas zu erzeugen, dass das angesammelte Kondensat durch die Strömung mitgerissen wird. Nachteilig daran ist, dass solche Maßnahmen üblicherweise nur bei mittleren bis hohen Lasten der Brennkraftmaschine helfen. Normalerweise kann mit kurzen Gasstößen die Kondensatansammlung ausgetragen werden, wobei bei einem Stop-and-Go-Fahrverhalten im Stadtverkehr bzw. im Nahverkehr die dabei auftretenden Druckdifferenzen zumeist jedoch nicht für ein umfassendes Austragen der Kondensatansammlung ausreichen.

Ohne derartige Maßnahmen kann es auftreten, dass sich zum Beispiel der Nachschalldämpfer infolge der üblicherweise schrägen Einbaulage zum Fahrzeugheck und dem relativ hochstehenden Endrohr bei dementsprechend tiefen Außentemperaturen mit Kondensat füllen kann. Dies führt zu einer Geräuschbelastung infolge von Schwapp- und Blubbergeräuschen in diesem Abschnitt der Abgasanlage und kann in ungünstigsten Fall bei zurücklaufendem Kondensat und Dauerfrost bzw. dementsprechend tiefen Temperaturen zum Verschließen der Abgasanlage infolge des Einfrierens durch einen Eispfropfen führen.

Besonders nachteilig kann die Situation bei neueren Bauteilen in der Abgasanlage sein, wie zum Beispiel bei über Rohre angeschlossenen Helmholtz-Resonatorkammern oder bei Lautsprecher aufweisenden Volumina von aktiven Geräuschunterdrückungseinrichtungen. Derartige Elemente werden nicht zwingend von Abgas durchströmt und werden somit schlechter und langsamer durch das Abgas aufgeheizt, sind aber ebenso wie die von dem Abgas durchströmten Bereiche der Abgasanlage dem Abgas und dem darin enthaltenen Verbrennungswasser ausgesetzt und können bei dementsprechenden Betriebszuständen des Kraftfahrzeugs und damit einhergehenden tiefen Temperaturen eine Kondensatansammlung erfahren. Deshalb versucht man solche Komponenten der Abgasanlage üblicherweise so anzuordnen, dass immer ein Gefälle vom tiefsten Punkt einer solchen Komponente zum heißen Abgasrohr ausgebildet wird, so dass entstandenes Kondensat ablaufen kann und so vollständig wie möglich aus der Abgasanlage respektive diesen Komponenten ausgetrieben werden kann. Dies kann jedoch zu ungünstigen Einbaulagen im Fahrzeug bezüglich solcher Komponenten aber auch daran angeschlossener Komponenten der Abgasanlage führen. Somit ist man aufgrund der notwendigen Austragung von Kondensatansammlungen aus der Abgasanlage hinsichtlich der Konstruktionsfreiheit der Abgasanlage beschränkt.

Eine gattungsgemäße Abgasanlage ist aus der JP H06-93826 A bekannt. Sie umfasst einen vom Abgas nicht durchströmten Bereich, der einen Kondensatsammelbereich aufweist, einen vom Abgas durchströmten Bereich und eine Wärmeübertragungseinrichtung, wobei der vom Abgas nicht durchströmte Bereich ein aktiver Schalldämpfer ist, dessen Gehäuse den Kondensatsammelbereich aufweist, und wobei der vom Abgas durchströmte Bereich ein Abgasrohr ist.

Aus der EP 2 108 791 A1 ist ein aktiver Schalldämpfer bekannt, der mittels eines nicht durchströmten Verbindungsrohrs vom abgasführenden Bereich getrennt ist.

Aus der US 5 619 020 A ist ein aktiver Schalldämpfer für eine Abgasanlage einer Brennkraftmaschine bekannt, der ein zentrales Abgasrohr aufweist, das einen vom Abgas durchströmten Bereich definiert. Der Schalldämpfer besitzt außerdem eine das Abgasrohr umhüllende Ringkammer, die über eine Unterbrechung des Abgasrohrs mit diesem akustisch verbunden ist, jedoch einen vom Abgas nicht durchströmten Bereich definiert. In einem in Einbaulage unteren Bereich der Ringkammer kann sich Kondensat ansammeln, so dass in dieser Ringkammer ein Kondensatsammelbereich definiert ist. Im Betrieb der Abgasanlage kann Wärme vom Abgasrohr auf Wände eines Gehäuses des Schalldämpfers übertragen werden und über diese Wände in den Kondensatsammelbereich gelangen. Insoweit definieren diese Wände eine interne Wärmeübertragungseinrichtung des Schalldämpfers.

Die vorliegende Erfindung beschäftigt sich mit dem Problem, für eine Abgasanlage, bei der es in einem vom Abgas nicht durchströmten Bereich zu einer Kondensatansammlung kommt, eine verbesserte Ausführungsform anzugeben, die sich insbesondere dadurch auszeichnet, dass nachteilige Effekte einer Kondensatansammlung reduziert sind, während gleichzeitig mehr Gestaltungsfreiheit für die Anordnung des nicht durchströmten Bereichs angestrebt ist. Bevorzugt ist dabei eine besonders preiswerte Lösung.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, bei einer Abgasanlage, die einen vom Abgas nicht durchströmten Bereich mit einem Kondensatsammelbereich und einen vom Abgas durchströmten Bereich umfasst, eine Wärmeübertragungseinrichtung vorzusehen, die den Kondensatsammelbereich mit dem vom Abgas durchströmten Bereich wärmeübertragend verbindet. Im Betrieb der Abgasanlage bzw. im Betrieb der damit ausgestatteten Brennkraftmaschine wird der vom Abgas durchströmte Bereich von den heißen Verbrennungsabgasen der Brennkraftmaschine durchströmt, wodurch sich der vom Abgas durchströmte Bereich aufheizt. Mit Hilfe der Wärmeübertragungseinrichtung kann nun von dem vom Abgas durchströmten, aufgeheizten Bereich Wärme zum Kondensatsammelbereich übertragen werden. Hierdurch ist es möglich, Kondensat, das sich im Kondensatsammelbereich angesammelt hat, zu erwärmen bzw. zu verdampfen. Nachteilige Auswirkungen flüssigen Kondensats können dadurch vermieden werden. Gleichzeitig ergeben sich vorteilhafte Möglichkeiten zur Anordnung des nicht durchströmten Bereichs relativ zum durchströmten Bereich. Da die Wärmeübertragungseinrichtung mit Wärmeübertragung arbeitet, kommt sie ohne Fremdenergie und insbesondere ohne elektrische Energie aus. Vielmehr wird die in dem abgeführten Abgas ohnehin enthaltene Wärmeenergie genutzt. Insbesondere lässt sich diese Lösung somit besonders preiswert realisieren.

Gemäß einer vorteilhaften Ausführungsform kann die Wärmeübertragungseinrichtung zumindest einen Wärmeübertragungskörper aufweisen, der einerseits mit dem vom Abgas durchströmten Bereich wärmeübertragend verbunden ist und der andererseits mit dem Kondensatsammelbereich wärmeübertragend verbunden ist. Zweckmäßig überträgt der Wärmeübertragungskörper Wärme durch Wärmeleitung, insbesondere ausschließlich. Ein derartiger Wärmeübertragungskörper kann durch einen einfachen Stab oder durch ein Rohr oder dergleichen gebildet sein.

Beispielsweise kann der Wärmeübertragungskörper aus einem Wärmeleitmaterial bestehen, wie z.B. aus Kupfer oder Aluminium bzw. aus einer Kupfer- oder Aluminiumlegierung. Alternativ dazu kann der Wärmeübertragungskörper durch ein Wärmeleitrohr gebildet sein. Ein derartiges Wärmeleitrohr, das auch als Heatpipe bezeichnet werden kann, umfasst in üblicher Weise einen Kondensationsbereich, einen Verdampfungsbereich und einen Transportbereich, der den Kondensationsbereich mit dem Verdampfungsbereich über einen Dampfpfad sowie einen Kondensatpfad verbindet. Insbesondere kann der Transportbereich eine Kapillarstruktur enthalten, um das Kondensat vom Kondensationsbereich zum Verdampfungsbereich zu transportieren. Ein derartiges Wärmeleitrohr besitzt eine um den Faktor 3 bis Faktor 4 größere Wärmeleitfähigkeit als ein geometrisch gleicher Körper aus Wärmeleitmaterial. Auf diese Weise kann eine sehr effektive Aufheizung des Kondensatsammelbereichs realisiert werden.

Entsprechend einer anderen vorteilhaften Ausführungsform kann der Wärmeübertragungskörper im Inneren des Kondensatsammelbereichs eine Wärmeübertragungsstruktur aufweisen, was die Wärmeübertragung vom Wärmeübertragungskörper auf das Kondensat verbessert. Zusätzlich oder alternativ kann der Wärmeübertragungskörper im Inneren des vom Abgas durchströmten Bereichs eine Wärmeübertragungsstruktur aufweisen, um die Wärmeübertragung vom Abgas auf den Wärmeübertragungskörper zu verbessern. Zur Realisierung dieser Wärmeübertragungsstrukturen kann der Wärmeübertragungskörper eine das Innere von einer Außenseite trennende Wand des Kondensatsammelbereichs durchsetzen. Zusätzlich oder alternativ kann der Wärmeübertragungskörper einen das Innere von einer Außenseite trennende Wand des vom Abgas durchströmten Bereichs durchsetzen. Die jeweilige Wärmeübertragungsstruktur charakterisiert sich gegenüber dem übrigen Wärmeübertragungskörper, der den Abstand zwischen dem vom Abgas durchströmten Bereich und dem Kondensatsammelbereich überbrückt, beispielsweise durch eine deutlich vergrößerte Oberfläche, was beispielsweise mit Hilfe von Rippen und/oder Lamellen oder dergleichen erreicht werden kann.

Die Wärmeübertragungseinrichtung ist erfindungsgemäß an einer Außenseite des vom Abgas durchströmten Bereichs und an einer Außenseite des Kondensatsammelbereichs angeordnet. Hierdurch kann die Wärmeübertragungseinrichtung eine Distanz zwischen dem vom Abgas durchströmten Bereich und dem Kondensatsammelbereich auf direktem und kurzem Weg überbrücken, nämlich außerhalb der dem Abgas ausgesetzten Bereichen der Abgasanlage.

Bei einer anderen Ausführungsform kann die Wärmeübertragungseinrichtung eine thermische Isolierung aufweisen, wodurch die Wärmeübertragung besonders effektiv und verlustarm realisierbar ist. Zusätzlich oder alternativ kann die Wärmeübertragungseinrichtung einen Anströmschutz und/oder einen Spritzwasserschutz aufweisen. Sofern die Wärmeübertragungseinrichtung außerhalb der dem Abgas ausgesetzten Bereichen angeordnet ist, besteht grundsätzlich die Möglichkeit, dass die Wärmeübertragungseinrichtung von einem Fahrtwind eines mit der Abgasanlage ausgestatteten Fahrzeugs und/oder Spritzwasser ausgesetzt ist. Sowohl eine Beaufschlagung mit Fahrtwind als auch eine Beaufschlagung mit Spritzwasser kann eine Kühlung der Wärmeübertragungseinrichtung verursachen, also Wärme abziehen, was die Effektivität der Wärmeübertragungseinrichtung reduziert. Das Anbringen eines entsprechenden Anströmschutzes bzw. eines entsprechenden Spritzwasserschutzes kann diese Gefahr reduzieren, wodurch die Effektivität der Wärmeübertragungseinrichtung verbessert ist.

Entsprechend einer anderen vorteilhaften Ausführungsform kann die Wärmeübertragungseinrichtung zumindest einen Zweiformkörper aufweisen, der sich dadurch charakterisiert, dass er abhängig von seiner Temperatur zumindest zwei verschiedene geometrische Formen einnimmt. Zweckmäßig ist nun vorgesehen, dass die wenigstens zwei Formen des Zweiformkörpers und die Temperaturabhängigkeit des Zweiformkörpers so ausgewählt werden, dass unterhalb einer vorbestimmten Temperatur eine Wärmeübertragung von dem vom Abgas durchströmten Bereich zum Kondensatsammelbereich über die Wärmeübertragungseinrichtung stattfindet, während eine solche Wärmeübertragung oberhalb der vorbestimmten Temperatur unterbrochen ist. Hierdurch kann beispielsweise eine Überhitzung des Kondensatsammelbereichs vermieden werden, nachdem das Kondensat verdampft ist.

Beispielsweise besteht in der ersten Form des Zweiformkörpers, die er unterhalb der vorbestimmten Temperatur einnimmt, ein durchgängiger körperlicher Kontakt zwischen dem vom Abgas durchströmten Bereich und der Wärmeübertragungseinrichtung einerseits und zwischen der Wärmeübertragungseinrichtung und dem Kondensatsammelbereich andererseits. Im Unterschied dazu ist in einer zweiten Form des Zweiformkörpers, die dieser oberhalb der vorbestimmten Temperatur einnimmt, diese durchgehende Kontaktierung unterbrochen. Beispielsweise kann die durchgehende Kontaktierung zwischen der Wärmeübertragungseinrichtung und dem vom Abgas durchströmten Bereich unterbrochen sein oder zwischen der Wärmeübertragungseinrichtung und dem Kondensatsammelbereich unterbrochen sein oder innerhalb der Wärmeübertragungseinrichtung unterbrochen sein. Sobald diese durchgehende Kontaktierung unterbrochen ist, wird ein direkter Wärmefluss unterbrochen, was die Wärmeübertragung signifikant reduziert und beispielsweise auf die deutlich schwächere Wärmeübertragung durch Konvektion reduziert.

Entsprechend einer anderen vorteilhaften Ausführungsform kann nun vorgesehen sein, den zuvor genannten Zweiformkörper in den weiter oben vorgestellten Wärmeübertragungskörper zu integrieren. Ebenso kann der Zweiformkörper in den Kondensatsammelbereich integriert sein. Alternativ ist es ebenso möglich, den Zweiformkörper in den vom Abgas durchströmten Bereich zu integrieren. Ein derartiger Zweiformkörper kann beispielsweise als Bimetallkörper oder als Memorymetallkörper ausgestaltet sein.

Entsprechend einer anderen vorteilhaften Ausführungsform kann der vom Abgas nicht durchströmte Bereich ein aktiver Schalldämpfer sein, dessen Gehäuse den Kondensatsammelbereich aufweist. Ein aktiver Schalldämpfer enthält üblicherweise zumindest einen Lautsprecher zum Generieren von Gegenschall, der zur Auslöschung bzw. Reduzierung des Störschalls erzeugt wird.

Das Gehäuse eines derartigen aktiven Schalldämpfers kann zweckmäßig über ein Verbindungsrohr zur Luftschallübertragung an den vom Abgas durchströmbaren Bereich angeschlossen sein. In diesem Fall kann der aktive Schalldämpfer zum Reduzieren von im Abgas mitgeführtem Störschall genutzt werden. Ohne eine derartige Verbindung zwischen dem aktiven Schalldämpfer und dem vom Abgas durchströmten Bereich kommt eine Ausführungsform aus, bei welcher der aktive Schalldämpfer beispielsweise zum Bedämpfen von Störgeräuschen genutzt wird, die über eine Frischluftanlage emittiert werden.

Anstelle eines aktiven Schalldämpfers kann der vom Abgas nicht durchströmte Bereich beispielsweise auch durch eine Resonanzkammer eines Helmholtz-Resonators gebildet sein. Ebenso sind andere Ausgestaltungen von derartigen vom Abgas nicht durchströmten Bereichen denkbar.

Zweckmäßig kann der vom Abgas durchströmte Bereich ein Abgasrohr sein, das sich im Grunde an einer beliebigen Stelle der Abgasanlage zwischen einem an die Brennkraftmaschine angeschlossenen Abgassammler und einem zur Umgebung offenen Endrohr befinden kann. Alternativ kann es sich bei dem vom Abgas durchströmten Bereich um eine beliebige Komponente der Abgasanlage handeln, wie z.B. ein Abgassammler, eine Turbine eines Abgasturboladers, einen Katalysator, ein Partikelfilter, ein Schalldämpfer oder ein Endrohr.

Entsprechend einer weiteren vorteilhaften Ausführungsform kann die Wärmeübertragungseinrichtung eine Stelleinrichtung zum Verändern der Wärmeübertragung zwischen dem Kondensatsammelbereich und dem vom Abgas durchströmten Bereich aufweisen. Hierdurch ist es möglich, weitere Parameter zum Steuern der Wärmeübertragung zu berücksichtigen. Beispielsweise kann über eine Sensorik mit Hilfe eines Temperatursensors eine Überhitzung des Kondensatsammelbereichs vermieden werden, indem rechtzeitig die Wärmeübertragung reduziert bzw. unterbrochen wird, was durch eine entsprechende Betätigung der Stelleinrichtung realisierbar ist. Ferner kann mittels einer Sensorik, beispielsweise mittels eines Feuchtigkeitssensors, das Vorhandensein von Kondensat im Kondensatsammelbereich überwacht werden, um das Einschalten der Wärmeübertragung bei fehlendem Kondensat zu vermeiden und/oder um die Wärmeübertragung zu reduzieren bzw. zu unterbrechen, falls das Kondensat vollständig verdampft ist. Zur Betätigung der Stelleinrichtung ist dann zweckmäßig eine entsprechende Steuerung vorgesehen, welche die Signale der Sensoren berücksichtigt. Weitere Parameter, die bei der Betätigung der Stelleinrichtung berücksichtigt werden können, sind beispielsweise ein aktueller Motorbetriebszustand, ein aktueller Fahrzeugbetriebszustand, eine Umgebungstemperatur sowie Witterungsverhältnisse, wie z.B. Regen bzw. Spritzwasser. Beispielsweise kann die zuvor genannte Steuerung dazu an ein Motorsteuergerät angeschlossen sein, das zum Betätigen der mit der Abgasanlage ausgestatteten Brennkraftmaschine vorgesehen ist. Insbesondere kann die zuvor genannte Steuerung über ein BusSystem mit besagter Motorsteuerung kommunizieren, insbesondere über einen CAN-Bus. Die Stelleinrichtung kann so konzipiert sein, dass sie die Wärmeübertragung einschalten und ausschalten bzw. aktivieren und deaktivieren kann. Beispielsweise kann die Stelleinrichtung hierzu mit dem Wärmeübertragungskörper zusammenwirken, um diesen zumindest zwischen zwei Relativlagen bezüglich des Kondensatsammelbereichs und bezüglich des vom Abgas durchströmten Bereichs zu verstellen. In der einen Relativlage ist ein durchgehender körperlicher Kontakt vom Kondensatsammelbereich über den Wärmeübertragungskörper zu dem vom Abgas durchströmten Bereich hergestellt. In der anderen Relativstellung ist dieser durchgehende körperliche Kontakt unterbrochen. Ferner ist denkbar, dass die Stelleinrichtung so konzipiert ist, dass sie für die Wärmeübertragung auch wenigstens eine Zwischenstellung mit reduzierter, jedoch nicht vollständig unterbrochener Wärmeübertragung realisiert. Insbesondere können beliebig viele Zwischenstellungen in Stufen oder stufenlos realisiert werden. Beispielsweise kann der Wärmeübertragungskörper zwischen seinen fest mit dem Kondensatsammelbereich und dem vom Abgas durchströmten Bereich verbundenen Endabschnitten einen beweglichen Mittelabschnitt besitzen, der über Kontaktflächen mit den Endabschnitten in Verbindung steht. Die Stelleinrichtung kann nun mit dem Mittelabschnitt des Wärmeübertragungskörpers gekoppelt sein, um diesen quer zu den Endabschnitten zu verstellen. Je nach Relativlage des Mittelabschnitts zu den Endabschnitten ergibt sich eine veränderte Größe für die zur Wärmeübertragung zur Verfügung stehenden Kontaktfläche zwischen den Endabschnitten und dem Mittelabschnitt. Hierdurch kann die Wärmeübertragungsleistung quasi stufenlos beliebig verändert werden.

Es ist klar, dass die Stelleinrichtung zusätzlich auch mit der thermischen Isolation und/oder mit dem Anströmschutz und/oder mit dem Spritzschutz zusammenwirken kann, soweit diese Komponenten vorhanden sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert.

Es zeigen, jeweils schematisch,
- Fig. 1: eine stark vereinfachte, prinzipielle Ansicht einer Abgasanlage im Bereich eines aktiven Schalldämpfers,
- Fig. 2 und 3: Detailansichten der Abgasanlage im Bereich einer Wärmeübertragungseinrichtung, bei verschiedenen Ausführungsformen,
- Fig. 4 bis 6: Ansichten wie in den Fig. 2 und 3 bei Ausführungsformen mit einem Zweiformkörper bei verschiedenen Ausführungsformen, in einem ersten Zustand a und einem zweiten Zustand b,
- Fig. 7 bis 9: Ansichten wie in den Fig. 2 und 3 bei einem Wärmeübertragungskörper mit wenigstens einer Wärmeübertragungsstruktur bei verschiedenen Ausführungsformen,
- Fig. 10: eine Ansicht wie in den Fig. 2 und 3, jedoch bei einer weiteren Ausführungsform.

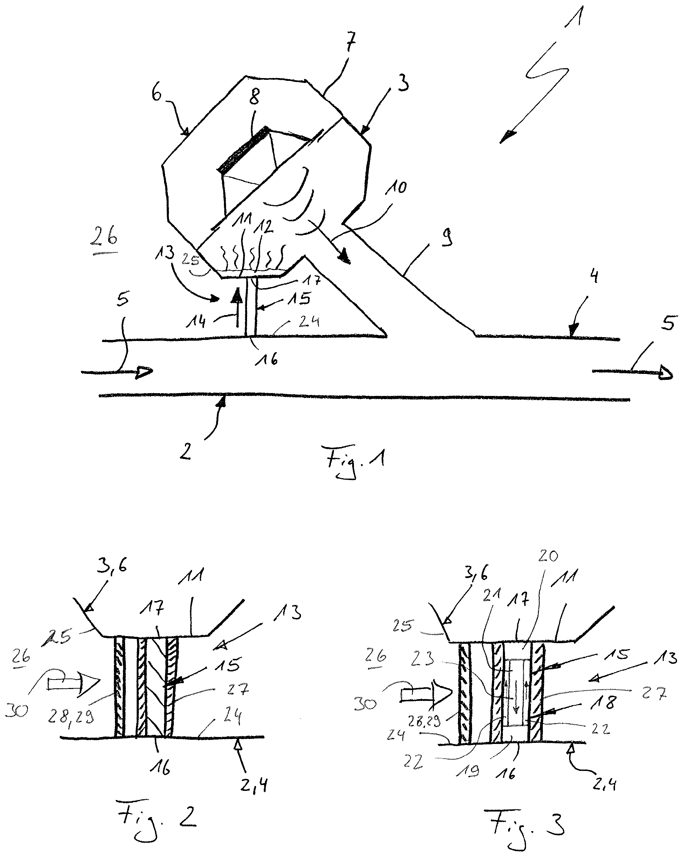

Entsprechend Fig. 1 umfasst eine Abgasanlage 1, die im Betrieb einer hier nicht gezeigten Brennkraftmaschine zum Abführen von Abgas dient, zumindest einen vom Abgas durchströmten Bereich 2 und zumindest einen vom Abgas nicht durchströmten Bereich 3. Bei dem vom Abgas durchströmten Bereich 2 handelt es sich beispielsweise um ein Abgasrohr 4. Eine im Betrieb der Abgasanlage 1 bzw. der Brennkraftmaschine im vom Abgas durchströmten Bereich 2 geführte Abgasströmung 5 ist in Fig. 1 durch Pfeile angedeutet.

Der vom Abgas nicht durchströmte Bereich 3 ist im gezeigten Beispiel durch einen aktiven Schalldämpfer 6 gebildet, der ein Gehäuse 7 aufweist, in dem zumindest ein Lautsprecher 8 angeordnet ist. Sofern der aktive Schalldämpfer 6 wie hier zum Bedämpfen von Störgeräuschen, die im Abgasstrom 5 mitgeführt werden vorgesehen ist, ist das Gehäuse 7 über ein Verbindungsrohr 9 so an den abgasführenden Bereich 2, also hier an das Abgasrohr 4 angeschlossen, dass eine Luftschallübertragung möglich ist. Vom Lautsprecher 8 erzeugter Gegenschall 10 ist in Fig. 1 durch einen Pfeil angedeutet, der sich durch das Verbindungsrohr 9 bis in den vom Abgas durchströmten Bereich 2 ausbreitet.

Der vom Abgas nicht durchströmte Bereich 3 weist einen Kondensatsammelbereich 11 auf, in dem sich Kondensat 12 ansammeln kann, das sich beispielsweise bei der Inbetriebnahme der Brennkraftmaschine bzw. der Abgasanlage 1 bevorzugt in dem vom Abgas nicht durchströmten Bereich 3 ausbilden kann. Im gezeigten Beispiel ist der Kondensatsammelbereich 11 im Gehäuse 7 des aktiven Schalldämpfers 6 ausgebildet. Zweckmäßig befindet sich der Kondensatsammelbereich 11 innerhalb des Gehäuses 7 bzw. innerhalb des vom Abgas nicht durchströmten Bereichs 3 an einer tiefliegenden Stelle, so dass das Kondensat durch die Schwerkraft angetrieben in den Kondensatsammelbereich 11 gelangt.

Die hier vorgestellte Abgasanlage 1 ist außerdem mit einer Wärmeübertragungseinrichtung 13 ausgestattet, die so konzipiert ist, dass sie den Kondensatsammelbereich 11 mit dem vom Abgas durchströmten Bereich 2, also hier mit dem Abgasrohr 4 wärmeübertragend verbindet. Eine entsprechende Wärmeübertragung ist in Fig. 1 durch einen Pfeil 14 angedeutet.

Gemäß den Fig. 1 bis 10 kann die Wärmeübertragungseinrichtung 13 zumindest einen Wärmeübertragungskörper 15 aufweisen. Der jeweilige Wärmeübertragungskörper 15 ist dabei einerseits bei 16 mit dem vom Abgas durchströmten Bereich 2, also hier mit dem Abgasrohr 4 wärmeübertragend verbunden und ist andererseits bei 17 mit dem Kondensatsammelbereich 11 wärmeübertragend verbunden. Ferner ist der Wärmeübertragungskörper 15 zweckmäßig so konzipiert, dass darin die Wärmeübertragung 14 zumindest teilweise mittels Wärmeleitung erfolgt.

Im Beispiel ist der Wärmeübertragungskörper 15 zur Überbrückung eines Abstands zwischen de Kondensatsammelbereich 11 und dem vom Abgas durchströmten Bereich 2 länglich bzw. stangenförmig bzw. stabförmig ausgestaltet.

Der Wärmeübertragungskörper 15 kann zweckmäßig aus einem Wärmeleitmaterial bestehen und insbesondere gemäß Fig. 2 als Vollkörper ausgestaltet sein. Geeignete Wärmeleitmaterialien sind bekanntermaßen Kupfer oder Aluminium oder entsprechende Kupfer- bzw. Aluminium-Legierungen.

Alternativ kann der Wärmeübertragungskörper 15 gemäß Fig. 3 durch ein Wärmeleitrohr 18 gebildet sein. Ein derartiges Wärmeleitrohr 18, das auch als Heatpipe bezeichnet werden kann, umfasst in üblicher Weise einen Verdampfungsbereich 19, der mit dem vom Abgas durchströmten Bereich 2 verbunden ist, einen Kondensationsbereich 20, der mit dem Kondensatsammelbereich 10 verbunden ist, und einen Transportbereich 21, der zwischen Kondensationsbereich 20 und Verdampfungsbereich 19 angeordnet ist. Der Transportbereich 21 umfasst zumindest einen Dampfkanal 22, durch den das verdampfte Arbeitsmedium des Wärmeleitrohrs 18 vom Verdampfungsbereich 19 zum Kondensationsbereich 20 strömt, sowie zumindest einen Kondensatpfad 23, durch den das kondensierte Arbeitsmedium vom Kondensationsbereich 20 zum Verdampfungsbereich 19 zurückgeführt wird. Insbesondere der Kondensationspfad 23 ist üblicherweise mittels einer kapillaren Struktur realisiert. Durch Auswahl des jeweiligen Arbeitsmediums und/oder des innerhalb des Wärmeleitrohrs 18 herrschenden Unterdrucks lässt sich der Temperaturbereich, in dem das Wärmeleitrohr 18 einen effektiven Wärmetransport vom Verdampfungsbereich 19 zum Kondensationsbereich 20 realisiert, vergleichsweise genau einstellen.

Wie den Darstellungen der Fig. 1 bis 10 entnehmbar ist, erfolgt die Anordnung der Wärmeübertragungseinrichtung 13 zweckmäßig so, dass sie sich sowohl an einer Außenseite 24 des vom Abgas durchströmten Bereichs 2 als auch an einer Außenseite 25 des Kondensatsammelbereichs 11 befindet. Somit befindet sich die Wärmeübertragungseinrichtung 13 außerhalb von dem Abgas ausgesetzten Bereichen der Abgasanlage 1. Insbesondere befindet sich die Wärmeübertragungseinrichtung 13 somit innerhalb einer Umgebung 26 der Abgasanlage 1. Um eine Wärmeabgabe in die Umgebung 26 zu reduzieren, kann die Wärmeübertragungseinrichtung 13 gemäß den Fig. 2 und 3 mit einer thermischen Isolierung 27 ausgestattet sein. Beispielsweise kann die thermische Isolierung 27 den Wärmeübertragungskörper 15 zwischen den Anschlussstellen 16 und 17 vollständig umhüllen bzw. umschließen.

Zusätzlich oder alternativ kann gemäß den Fig. 2 und 3 außerdem ein Anströmschutz 28 und/oder ein Spritzwasserschutz 29 vorgesehen sein, um die Wärmeübertragungseinrichtung 13 vor einer durch einen Pfeil 30 angedeuteten Beaufschlagung durch Fahrtwind bzw. durch Spritzwasser zu schützen.

Es ist klar, dass die vorstehend beschriebenen Varianten, die insbesondere den Wärmeleitkörper 15 bzw. das Wärmeleitrohr 18 sowie die thermische Isolierung 27 und den Anströmschutz 28 bzw. den Spritzwasserschutz 29 betreffen, grundsätzlich beliebig mit den nachfolgenden Ausführungsformen kombinierbar sind.

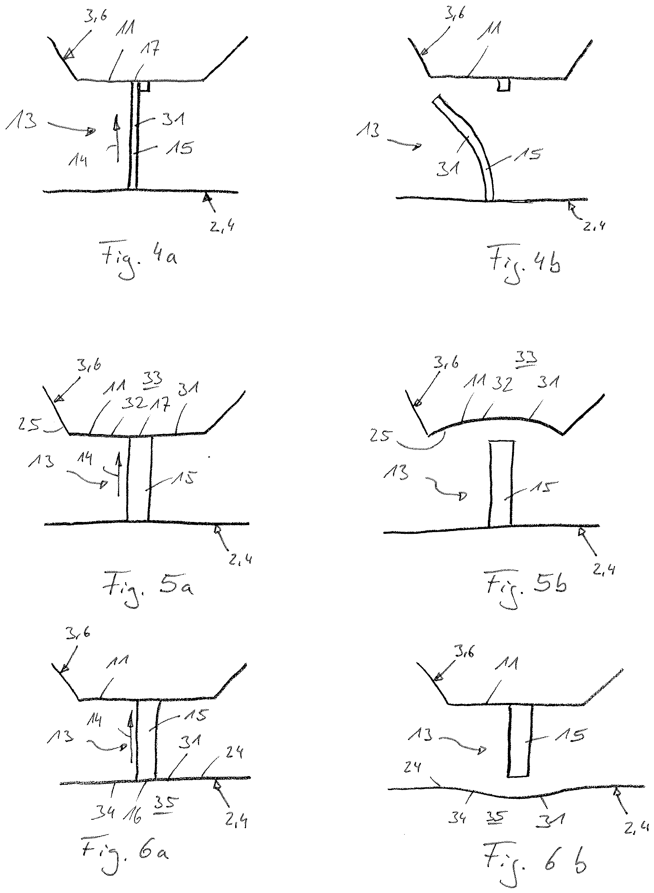

Die Fig. 4 bis 6 zeigen eine spezielle Ausführungsform, bei welcher die Wärmeübertragungseinrichtung 13 mit wenigstens einem Zweiformkörper 31 ausgestattet ist. Ein derartiger Zweiformkörper 31, der beispielsweise mit Hilfe eines Bimetallkörpers oder mit Hilfe einer Memorielegierung bzw. Formgedächtnislegierung realisierbar ist, charakterisiert sich dadurch, dass er abhängig von seiner Temperatur zumindest zwei verschiedene geometrische Formen einnehmen kann.

Bei den Fig. 4a und 4b ist der Zweiformkörper 31 in den Wärmeübertragungskörper 15 integriert. Entsprechend besitzt hier der Wärmeübertragungskörper 15 zumindest die beiden in den Fig. 4a und 4b wiedergegebenen unterschiedlichen geometrischen Formen.

Bei der in Fig. 5a und 5b wiedergegebenen Ausführungsform ist der Zweiformkörper 31 in den Kondensatsammelbereich 11, nämlich in eine Wand 32 des Kondensatsammelbereichs 11 integriert, die ein Inneres 33 des Kondensatsammelbereichs 11 von der Außenseite 25 trennt. Dementsprechend zeigen die Fig. 5a und 5b die zwei verschiedenen Formen bzw. Zustände der Wand 32 bzw. des Zweiformkörpers 31.

Bei der in Fig. 6a und 6b gezeigten Ausführungsform ist der Zweiformkörper 31 in den vom Abgas durchströmten Bereich 2 integriert, nämlich in eine Wand 34 des vom Abgas durchströmten Bereichs 2, die ein Inneres 35 des vom Abgas durchströmten Bereichs von der Außenseite 24 trennt. So zeigen die Fig. 6a und 6b die zwei verschiedenen Formen bzw. Zustände besagter Wand 34 bzw. des jeweiligen Zweiformkörpers 31.

Zweckmäßig erfolgt die Auslegung des jeweiligen Zweiformkörpers 31 so, dass in einem ersten Zustand, der in den Fig. 4a, 5a und 6a wiedergegeben ist und der sich unterhalb einer vorbestimmten Temperatur einstellt, der Zweiformkörper 31 eine erste Form einnimmt, welche die gewünschte Wärmeübertragung 14 von dem vom Abgas durchströmten Bereich 2 zum Kondensatsammelbereich 11 zulässt. Insbesondere ist in diesem ersten Zustand ein durchgehender körperlicher Kontakt von dem vom Abgas durchströmten Bereich 2 über die Wärmeübertragungseinrichtung 13 zum Kondensatsammelbereich 11 vorhanden, so dass also einerseits ein Kontakt zwischen der Wärmeübertragungseinrichtung 13 und dem vom Abgas durchströmten Bereich 2 und andererseits von der Wärmeübertragungseinrichtung 13 und dem Kondensatsammelbereich 11 vorhanden ist.

Im zweiten Zustand, der oberhalb der vorbestimmten Temperatur vorliegt, nimmt der Zweiformkörper 31 seine zweite Form ein, die in den Fig. 4b, 5b, 6b dargestellt ist. In diesem zweiten Zustand ist die Wärmeübertragung 14 von dem vom Abgas durchströmten Bereich 2 über die Wärmeübertragungseinrichtung 13 zum Kondensatsammelbereich 11 unterbrochen. Insbesondere ist dabei die durchgehende körperliche Kontaktierung aufgehoben bzw. unterbrochen. Gemäß Fig. 4b ist der Wärmeübertragungskörper 15, in den der Zweiformkörper 31 integriert ist, soweit verformt, dass er vom Kondensatsammelbereich 11 entfernt ist, so dass die entsprechende Wärmeübertragungsstelle 17 zwischen Wärmeübertragungskörper 15 und Kondensatsammelbereich 11 nicht mehr vorhanden ist. Bei dieser Variante ist der Wärmeübertragungskörper 15 mit dem vom Abgas durchströmten Bereich 2 verbunden. Bei einer alternativen Ausführungsform kann auch vorgesehen sein, dass der Wärmeübertragungskörper 15 fest mit dem Kondensatsammelbereich 11 verbunden ist, so dass er im zweiten Zustand gemäß Fig. 4b dann von dem vom Abgas durchströmten Bereich 2 abhebt.

Bei der in Fig. 5b gezeigten Ausführungsform nimmt der durch die Wand 32 gebildete Zweiformkörper 31 die zweite Form ein, die zu einer Beabstandung zwischen der Wand 32 der Wärmübertragungseinrichtung 13 führt, so dass auch hier die entsprechende Kontaktstelle 17 eliminiert ist.

Bei dem in Fig. 6b gezeigten Zustand hebt die Wand 34, die den Zweiformkörper 31 bildet, von der Wärmeübertragungseinrichtung 13 ab, wodurch die entsprechende Kontaktstelle 16 eliminiert ist.

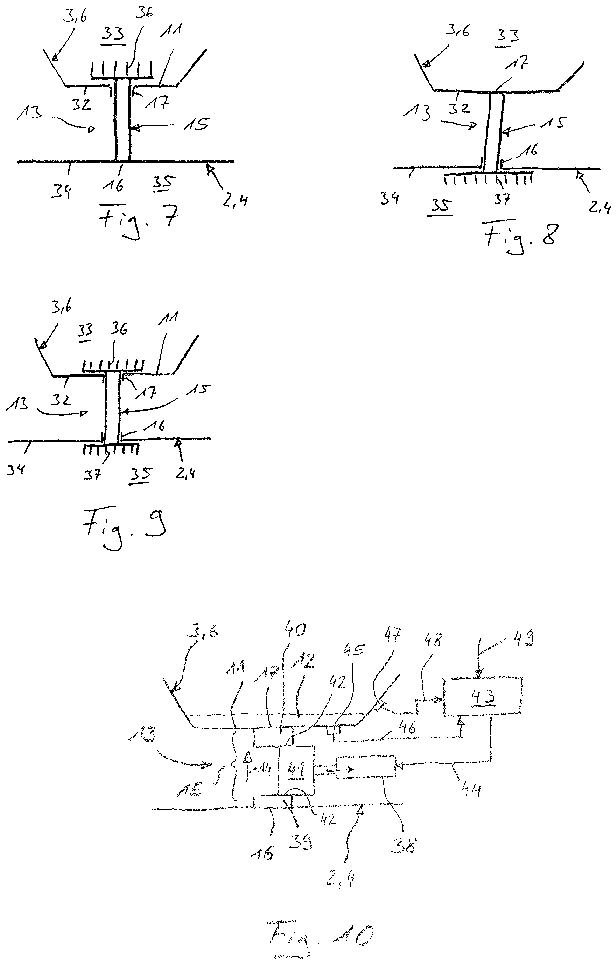

Bei der in Fig. 7 gezeigten Ausführungsform besitzt der Wärmeübertragungskörper 15 im Inneren 33 des Kondensatsammelbereichs 11 eine Wärmeübertragungsstruktur 36. Diese verbessert die Wärmeeinleitung in das Kondensat 12. Der Wärmeübertragungskörper 15 durchsetzt hierbei die Wand 32.

Bei der in Fig. 8 gezeigten Ausführungsform besitzt der Wärmeübertragungskörper 15 im Inneren 35 des vom Abgas durchströmten Bereichs 2 eine Wärmeübertragungsstruktur 37, welche die Wärmeübertragung von der Abgasströmung 5 auf den Wärmeübertragungskörper 15 verbessert. In diesem Fall durchsetzt der Wärmeübertragungskörper 15 die Wand 34.

Fig. 9 zeigt eine Ausführungsform, bei welcher der Wärmeübertragungskörper 15 sowohl im Inneren 33 des Kondensatsammelbereichs 11 als auch im Inneren 35 des vom Abgas durchströmten Bereichs 2 jeweils eine Wärmeübertragungsstruktur 36 bzw. 37 aufweist. In diesem Fall durchsetzt der Wärmeübertragungskörper 15 sowohl die Wand 32 als auch die Wand 34.

Bei der in Fig. 10 gezeigten Ausführungsform umfasst die Wärmeübertragungseinrichtung 13 eine Stelleinrichtung 38, mit deren Hilfe die Wärmeübertragung 14 von dem vom Abgas durchströmten Bereich 2 zum Kondensatsammelbereich 11 variiert werden kann. Im gezeigten Beispiel ist die Stelleinrichtung 38 als Kolben-Zylinder-Aggregat oder als Spindeltrieb ausgestaltet. Grundsätzlich sind jedoch beliebige Stelleinrichtungen denkbar, die elektrisch und/oder pneumatisch und/oder hydraulisch arbeiten. Im Beispiel der Fig. 10 ist die Stelleinrichtung 38 mit dem Wärmeübertragungskörper 15 gekoppelt, um durch Verstellen des Wärmeübertragungskörpers 15 die Wärmeübertragung 14 zu verändern. Im gezeigten Beispiel ist der Wärmeübertragungskörper 15 dreigliedrig konfiguriert, so dass er einen fest mit dem vom Abgas durchströmten Bereich 2 verbundenen ersten Endabschnitt 39, einen fest mit dem Kondensatsammelbereich 11 verbundenen zweiten Endabschnitt 40 und einen Mittelabschnitt 41 umfasst. Der Mittelabschnitt 41 steht über Kontaktflächen 42 mit den beiden Endabschnitten 39, 40 in körperlichem Kontakt. Der Mittelabschnitt 41 ist relativ zu den Endabschnitten 39, 40 mit Hilfe der Stelleinrichtung 38 verstellbar, was in Fig. 10 durch einen Doppelpfeil angedeutet ist. Hierdurch kann die effektive Größe der Kontaktflächen 42 verändert werden, was sich direkt auf die Wärmeübertragung 14 auswirkt. Im Zustand der Fig. 10 ist der Mittelabschnitt 41 zu mehr als 50% aus der Flucht der Endabschnitte 39, 40 seitlich heraus bewegt, wodurch die effektiven Kontaktflächen 42 signifikant verkleinert sind. Grundsätzlich kann vorgesehen sein, dass die Stelleinrichtung 38 den Mittelabschnitt 41 vollständig aus der Flucht der beiden Endabschnitte 39, 40 herausbewegen kann, wodurch die Kontaktflächen 42 auf den Wert Null verkleinert sind. Mit anderen Worten, der körperliche Kontakt zwischen den Endabschnitten 39, 40 und dem Mittelabschnitt 41 ist dann unterbrochen. Ebenso kann die Stelleinrichtung 38 den Mittelabschnitt 41 fluchtend zwischen den beiden Endabschnitten 39, 40 positionieren, wodurch die Kontaktflächen 42 und somit die Wärmeübertragung 14 maximal sind. Grundsätzlich sind dann auch beliebige Zwischenstellungen denkbar.

Zum Betätigen der Stelleinrichtung 38 ist gemäß Fig. 10 zweckmäßig eine Steuerung 43 vorgesehen, die über eine Steuerleitung 44 die Stelleinrichtung 38 ansteuern kann. Im Beispiel ist eine Sensorik vorgesehen, die mit der Steuerung 43 zusammenwirkt. Diese Sensorik umfasst im Beispiel einen Feuchtigkeitssensor 45, mit dessen Hilfe festgestellt werden kann, ob im Kondensatsammelbereich 11 Kondensat 12 vorhanden ist oder nicht. Eine entsprechende Signalleitung 46 verbindet den Feuchtigkeitssensor 45 mit der Steuerung 43. Ein Temperatursensor 47 der Sensorik überwacht die Temperatur im Kondensatsammelbereich 11 und steht über eine Signalleitung 48 mit der Steuerung 43 in Verbindung. Darüber hinaus kann die Steuerung 43 zum Beispiel über einen Datenbus 49 mit einem hier nicht gezeigten Motorsteuergerät zum Betreiben der mit der Abgasanlage 1 ausgestatteten Brennkraftmaschine kommunizieren. Somit ist es insbesondere möglich, die Wärmeübertragungseinrichtung 13, insbesondere die damit erzielbare Wärmeübertragung 14, abhängig von quasi beliebigen Parametern zu steuern bzw. einzustellen. Beispielsweise kann die Steuerung 43 einen Motorbetriebszustand und/oder einen Fahrzeugbetriebszustand und/oder eine Außentemperatur berücksichtigen. Da moderne Kraftfahrzeuge üblicherweise mit einem Regensensor zum Steuern einer Windschutzscheibenwischeinrichtung ausgestattet sind, kann die Steuerung 43 über den Datenbus 49 auch berücksichtigen, ob Spritzwasser die Wärmeübertragung 14 reduziert oder nicht. Über die gezeigte Sensorik 45, 47 kann beispielsweise eine unnötige Aktivierung der Wärmeübertragung bei fehlendem Kondensat 12 vermieden werden. Außerdem kann eine Überhitzung des Kondensatsammelbereichs 11 vermieden werden.

## Patentansprüche

1. Abgasanlage für eine Brennkraftmaschine, insbesondere eines Kraftfahrzeugs,
- mit mindestens einem vom Abgas nicht durchströmten Bereich (3), der einen Kondensatsammelbereich (11) aufweist,
- mit mindestens einem vom Abgas durchströmten Bereich (2),
- mit einer Wärmeübertragungseinrichtung (13),
- wobei der vom Abgas nicht durchströmte Bereich (3) ein aktiver Schalldämpfer (6) ist, dessen Gehäuse (7) den Kondensatsammelbereich (11) aufweist,
- wobei der vom Abgas durchströmte Bereich (2) ein Abgasrohr (4) ist,
**dadurch gekennzeichnet,**
- **dass** ein Verbindungsrohr (9) vorgesehen ist, über das das Gehäuse (7) zur Luftschallübertragung an den vom Abgas durchströmten Bereich (2) angeschlossen ist,
- **dass** die Wärmeübertragungseinrichtung (13) den Kondensatsammelbereich (11) mit dem vom Abgas durchströmten Bereich (2) wärmeübertragend verbindet,
- **dass** die Wärmeübertragungseinrichtung (13) an einer Außenseite (24) des vom Abgas durchströmten Bereichs (2) und an einer Außenseite (25) des Kondensatsammelbereichs (11) angeordnet ist.

2. Abgasanlage nach Anspruch 1,
**dadurch gekennzeichnet,**
**dass** die Wärmeübertragungseinrichtung (13) zumindest einen Wärmeübertragungskörper (15) aufweist, der einerseits mit dem vom Abgas durchströmten Bereich (2) wärmeübertragend verbunden ist und der andererseits mit dem Kondensatsammelbereich (11) wärmeübertragend verbunden ist.

3. Abgasanlage nach Anspruch 2,
**dadurch gekennzeichnet,**
**dass** der Wärmeübertragungskörper (15) aus einem Wärmeleitmaterial besteht oder ein Wärmeleitrohr (18) ist.

4. Abgasanlage nach Anspruch 2 oder 3,
**dadurch gekennzeichnet,**
- **dass** der Wärmeübertragungskörper (15) im Inneren (33) des Kondensatsammelbereichs (11) eine Wärmeübertragungsstruktur (36) aufweist und/oder,
- **dass** der Wärmeübertragungskörper (15) im Inneren (35) des vom Abgas durchströmten Bereichs (2) eine Wärmeübertragungsstruktur (37) aufweist, und/oder
- **dass** der Wärmeübertragungskörper (15) eine das Innere (33) von einer Außenseite (25) trennende Wand (32) des Kondensatsammelbereichs (11) durchsetzt, und/oder
- **dass** der Wärmeübertragungskörper (15) eine das Innere (35) von einer Außenseite (24) trennende Wand (34) des vom Abgas durchströmten Bereichs (2) durchsetzt.

5. Abgasanlage nach einem der Ansprüche 1 bis 4,
**dadurch gekennzeichnet,**
**dass** die Wärmeübertragungseinrichtung (13) eine thermische Isolierung (27) und/oder einen Anströmschutz (28) und/oder einen Spritzwasserschutz (29) aufweist.

6. Abgasanlage nach einem der Ansprüche 1 bis 5,
**dadurch gekennzeichnet,**
**dass** die Wärmeübertragungseinrichtung (13) zumindest einen Zweiformkörper (31) aufweist, der abhängig von seiner Temperatur zumindest zwei verschiedene geometrische Formen einnimmt, wobei die wenigstens zwei Formen so gewählt sind, dass unterhalb einer vorbestimmten Temperatur eine Wärmeübertragung von dem vom Abgas durchströmten Bereich (2) über die Wärmeübertragungseinrichtung (13) zum Kondensatsammelbereich (11) stattfindet und dass diese Wärmeübertragung oberhalb der vorbestimmten Temperatur unterbrochen ist.

7. Abgasanlage nach Anspruch 6,
**dadurch gekennzeichnet,**
- **dass** der Zweiformkörper (31) in den Wärmeübertragungskörper (15) nach Anspruch 2 integriert ist, oder
- **dass** der Zweiformkörper (31) in den Kondensatsammelbereich (11) integriert ist, oder
- **dass** der Zweiformkörper (31) in den vom Abgas durchströmten Bereich (2) integriert ist.

8. Abgasanlage nach einem der Ansprüche 1 bis 7,
**dadurch gekennzeichnet,**
**dass** die Wärmeübertragungseinrichtung (13) eine Stelleinrichtung (38) zum Verändern der Wärmeübertragung (14) zwischen dem Kondensatsammelbereich (11) und dem vom Abgas durchströmten Bereich (2) aufweist, die insbesondere mit dem Wärmeübertragungskörper (15) zusammenwirkt.

## Claims

1. Exhaust system for an internal combustion engine, in particular of a motor vehicle,
- with at least one area (3) through which no exhaust gas flows, the area comprising a condensate accumulation area (11),
- with at least one area (2) through which exhaust gas flows,
- with a heat transfer device (13),
- wherein the area (3) through which no exhaust gas flows is an active silencer (6) the housing (7) of which comprises the condensate accumulation area (11),
- wherein the area (2) through which exhaust gas flows is an exhaust pipe (4), **characterised in that**
- a connecting pipe (9) is provided which connects the housing (7) for airborne transmission of sound to the area (2) through which exhaust gas flows,
- the heat transfer device (13) connects the condensate accumulation area (11) to the area (2) through which exhaust gas flows in a heat transferring manner,
- the heat transfer device (13) is arranged at an outer side (24) of the area (2) through which exhaust gas flows and at an outer side (25) of the condensate accumulation area (11).

2. Exhaust system according to claim 1,
**characterised in that**
the heat transfer device (13) comprises at least one heat transfer body (15) which is connected in a heat transferring manner to the area (2) through which exhaust gas flows on the one hand, and to the condensate accumulation area (11) on the other hand.

3. Exhaust system according to claim 2,
**characterised in that**
the heat transfer body (15) is made of a heat conducting material or is a heat pipe (18).

4. Exhaust system according to claim 2 or 3,
**characterised in that**
- the heat transfer body (15) comprises a heat transfer structure (36) on the inside (33) of the condensate accumulation area (11), and/or
- the heat transfer body (15) comprises a heat transfer structure (37) on the inside (35) of the area (2) through which exhaust gas flows, and/or
- the heat transfer body (15) extends through a wall (32) of the condensate accumulation area (11) separating the inside (33) from an outside (25), and/or
- the heat transfer body (15) extends through a wall (34) of the area (2) through which exhaust gas flows separating the inside (35) from an outside (24).

5. Exhaust system according to any of claims 1 to 4,
**characterised in that**
the heat transfer device (13) comprises a thermal insulation (27) and/or an incident flow protection (28) and/or a splash water protection (29).

6. Exhaust system according to any of claims 1 to 5,
**characterised in that**
the heat transfer device (13) comprises at least one two-piece body (31) which assumes, depending on its temperature, at least two different geometric shapes, wherein the at least two shapes are selected such that a heat transfer from the area (2) through which exhaust gas flows via the heat transfer device (13) to the condensate accumulation area (11) takes place below a predetermined temperature and that this heat transfer is interrupted above the predetermined temperature.

7. Exhaust system according to claim 6,
**characterised in that**
- the two-piece body (31) is integrated in the heat transfer body (15) according to claim 2, or
- the two-piece body (31) is integrated in the condensate accumulation area (11), or
- the two-piece body (31) is integrated in the area (2) through which exhaust gas flows.

8. Exhaust system according to any of claims 1 to 7,
**characterised in that**
the heat transfer device (13) comprises a setting device (38) for adjusting the heat transfer (14) between the condensate accumulation area (11) and the area (2) through which exhaust gas flows, the setting device in particular interacting with the heat transfer body (15).

## Revendications

1. Installation d'échappement pour un moteur à combustion interne, en particulier d'un véhicule automobile,
- avec au moins une zone (3) non traversée par du gaz d'échappement qui présente une zone collectrice de condensat (11),
- avec au moins une zone (2) traversée par du gaz d'échappement,
- avec un dispositif de transmission de chaleur (13),
- dans laquelle la zone (3) non traversée par le gaz d'échappement est un amortisseur de son actif (6), dont le boîtier (7) présente la zone collectrice de condensat (11),
- dans laquelle la zone (2) traversée par le gaz d'échappement (2) est un tube de gaz d'échappement (4),
**caractérisée en ce**
- **qu'**un tube de liaison (9) est prévu, par lequel le boîtier (7) est raccordé pour la transmission acoustique aérienne à la zone (2) traversée par le gaz d'échappement (2),
- **que** le dispositif de transmission de chaleur (13) relie par transmission de chaleur la zone collectrice de condensat (11) à la zone (2) traversée par le gaz d'échappement,
- **que** le dispositif de transmission de chaleur (13) est agencé sur un côté extérieur (24) de la zone (2) traversée par le gaz d'échappement et sur un côté extérieur (25) de la zone collectrice de condensat (11).

2. Installation d'échappement selon la revendication 1,
**caractérisée en ce**
**que** le dispositif de transmission de chaleur (13) présente au moins un corps de transmission de chaleur (15) qui est relié par transmission de chaleur d'une part à la zone (2) traversée par le gaz d'échappement et qui est relié par transmission de chaleur d'autre part à la zone collectrice de condensat (11).

3. Installation d'échappement selon la revendication 2,
**caractérisée en ce**
**que** le corps de transmission de chaleur (15) se compose d'un matériau thermoconducteur ou est un tube thermoconducteur (18).

4. Installation d'échappement selon la revendication 2 ou 3,
**caractérisée en ce**
- **que** le corps de transmission de chaleur (15) présente, à l'intérieur (33) de la zone collectrice de condensat (11), une structure de transmission de chaleur (36) et/ou,
- **que** le corps de transmission de chaleur (15) présente, à l'intérieur (35) de la zone traversée par le gaz d'échappement (2), une structure de transmission de chaleur (37), et/ou
- **que** le corps de transmission de chaleur (15) traverse une paroi (32) séparant l'intérieur (33) d'un côté extérieur (25) de la zone collectrice de condensat (11), et/ou
- **que** le corps de transmission de chaleur (15) traverse une paroi (34) séparant l'intérieur (35) d'un côté extérieur (24) de la zone traversée par le gaz d'échappement (2).

5. Installation d'échappement selon l'une des revendications 1 à 4,
**caractérisée en ce**
**que** le dispositif de transmission de chaleur (13) présente une isolation thermique (27) et/ou une protection contre les afflux (28) et/ou une protection contre les projections d'eau (29).

6. Installation d'échappement selon l'une des revendications 1 à 5,
**caractérisée en ce**
**que** le dispositif de transmission de chaleur (13) présente au moins un corps à deux formes (31) qui occupe en fonction de sa température au moins deux différentes formes géométriques, dans laquelle les au moins deux formes sont choisies de sorte qu'en dessous d'une température prédéterminée, une transmission de chaleur de la zone (2) traversée par le gaz d'échappement ait lieu par le dispositif de transmission de chaleur (13) à la zone collectrice de condensat (11) et que cette transmission de chaleur soit interrompue au-dessus de la température prédéterminée.

7. Installation d'échappement selon la revendication 6,
**caractérisée en ce**
- **que** le corps à deux formes (31) est intégré dans le corps de transmission de chaleur (15) selon la revendication 2, ou
- **que** le corps à deux formes (31) est intégré dans la zone collectrice de condensat (11), ou
- **que** le corps à deux formes (31) est intégré dans la zone (2) traversée par du gaz d'échappement.

8. Installation d'échappement selon l'une des revendications 1 à 7,
**caractérisée en ce**
**que** le dispositif de transmission de chaleur (13) présente un dispositif de réglage (38) pour la modification de la transmission de chaleur (14) entre la zone collectrice de condensat (11) et la zone (2) traversée par du gaz d'échappement qui coagit en particulier avec le corps de transmission de chaleur (15).
